# EUROPEAN PATENT APPLICATION

(11) **EP 4 613 606 A1**
(43) Date of publication of application: **10.09.2025**
(21) Application number: 24210784.5
(22) Date of filing: 05.11.2024
(51) Int. Cl.: B61L 23/04, G01S 13/90, G06N 20/00, G01S 17/00

(54) **SYSTEMS AND METHODS FOR MONITORING RAILWAY INFRASTRUCTURE**

(30) Priority: 06.03.2024 US 202463562035 P
(71) Applicant: ApoSys Technologies Inc., Mississauga, ON L5A 1K8 (CA)
(72) Inventor: WANG, Zhongshuai, Mississauga, L5E 2M8 (CA)
(74) Representative: Mathys & Squire

(57) **Abstract**

A system and a computer-implemented method of monitoring railway infrastructure are provided. The system comprises a memory storing processor-executable instructions; and a processor communicatively coupled to the memory. The instructions configure the processor to: receive sensor data from multiple sensors indicating a condition of the railway infrastructure and a subsurface associated with the railway infrastructure; receive satellite radar data indicating terrain stability associated with the railway infrastructure; identify a defect associated with the railway infrastructure by inputting the sensor data and the satellite radar data into one or more trained machine learning models; and provide, via a user interface, a monitor output for the railway infrastructure based on the identified defect.

## Description

### Cross-Reference to Related Application

This application claims the benefit of United States Provisional Patent Application No. 63/562,035 filed March 6, 2024, and the entire contents of United States Provisional Patent Application No. 63/562,035 are hereby incorporated herein in its entirety.

### Field

The described embodiments relate to systems and methods for monitoring railway infrastructure.

### Background

Rail transport is one of the primary means of transportation for passengers and freight. Reliable and well-maintained railway infrastructure can enable high performance rail transportation. However, there can be shortcomings associated with the typical reactive or preventive maintenance strategies used by railway infrastructure owners/operators to repair and maintain the railway infrastructure.

For example, poor resource allocation can cause maintenance delays. Repairs may only be performed in response to a failure or after the preventive maintenance schedule is overdue. This can cause safety issues, higher repair downtimes (e.g., higher downtime associated with replacement of a failed component compared with conducting timely preventive maintenance of the component), and/or faster degradation of the railway infrastructure.

As another example, excessive preventive maintenance can increase operational costs associated with higher preventive maintenance downtimes, higher labor costs, higher operational challenges (e.g., associated with conducting preventive maintenance in remote locations) and/or lower operational lifetime of the railway infrastructure components (e.g., associated with replacing components more frequently than necessary).

Addressing the above-noted shortcomings in railway infrastructure maintenance can enable improvements in safety, reliability, and/or cost associated with rail transportation.

### Summary

The following summary is provided to introduce the reader to the more detailed discussion to follow. The summary is not intended to limit or define any claimed or as yet unclaimed invention. One or more inventions may reside in any combination or subcombination of the elements or process steps disclosed in any part of this document including its claims and figures.

In a first aspect, there is provided a system for monitoring railway infrastructure. The system comprises a memory storing processor-executable instructions; and a processor communicatively coupled to the memory. The instructions configure the processor to: receive sensor data from multiple sensors indicating a condition of the railway infrastructure and a subsurface associated with the railway infrastructure; receive satellite radar data indicating terrain stability associated with the railway infrastructure; identify a defect associated with the railway infrastructure by inputting the sensor data and the satellite radar data into one or more trained machine learning models; and provide, via a user interface, a monitor output for the railway infrastructure based on the identified defect.

In one or more embodiments, the multiple sensors include one or more imaging devices, and the sensor data includes image data indicating a visual defect associated with a rail or a railway tie of the railway infrastructure.

In one or more embodiments, the multiple sensors include a ground positioning radar (GPR), and the sensor data includes radar data indicating a subsurface defect in a portion of the subsurface.

In one or more embodiments, the multiple sensors include a thermal sensor, and the sensor data includes temperature data of one or more rails of the railway infrastructure.

In one or more embodiments, the multiple sensors include a light detection and ranging (LiDAR) sensor, and the sensor data includes point cloud data of one or more rails of the railway infrastructure.

In one or more embodiments, the processor is further configured to receive global positioning system (GPS) data providing location information associated with the sensor data.

In one or more embodiments, the processor is further configured to receive inertial measurement unit (IMU) data providing at least one of location information and vibration information associated with the sensor data.

In one or more embodiments, one or more of the multiple sensors are installed under a rail car that travels along the railway infrastructure.

In one or more embodiments, the defect includes an existing defect detected in the railway infrastructure; and the monitor output includes a corrective action to address the defect.

In one or more embodiments, the defect includes a predicted future defect in the railway infrastructure; and the monitor output includes a preventative action to address the defect.

In one or more embodiments, the processor is further configured to: receive climate modeling data indicating future climate impact on the railway infrastructure; identify a predicted defect in the railway infrastructure by inputting the sensor data, the satellite radar data, and the climate modeling data into the one or more trained machine learning models; and provide the monitor output by recommending a proactive mitigation action against the predicted defect.

In a second aspect, there is provided a computer-implemented method of monitoring railway infrastructure. The method comprises: receiving sensor data from multiple sensors indicating a condition of the railway infrastructure and a subsurface associated with the railway infrastructure; receiving satellite radar data indicating terrain stability associated with the railway infrastructure; identifying a defect associated with the railway infrastructure by inputting the sensor data and the satellite radar data into one or more trained machine learning models; and providing, via a user interface, a monitor output for the railway infrastructure based on the identified defect.

In one or more embodiments, the sensor data includes image data generated by one or more imaging devices, the image data indicating a visual defect associated with a rail or a railway tie of the railway infrastructure.

In one or more embodiments, the sensor data includes radar data generated by a ground positioning radar (GPR), the radar data indicating a subsurface defect in a portion of the subsurface.

In one or more embodiments, the sensor data includes temperature data of one or more rails of the railway infrastructure, the temperature data being generated by a thermal sensor.

In one or more embodiments, the sensor data includes point cloud data of one or more rails of the railway infrastructure, the point cloud data being generated by a light detection and ranging (LiDAR) sensor.

In one or more embodiments, the method further comprises receiving global positioning system (GPS) data providing location information associated with the sensor data.

In one or more embodiments, the method further comprises receiving inertial measurement unit (IMU) data providing at least one of location information and vibration information associated with the sensor data.

In one or more embodiments, one or more of the multiple sensors are installed under a rail car that travels along the railway infrastructure.

In one or more embodiments, the defect includes an existing defect detected in the railway infrastructure; and the monitor output includes a corrective action to address the defect.

In one or more embodiments, the defect includes a predicted future defect in the railway infrastructure; and the monitor output includes a preventative action to address the defect.

In one or more embodiments, the method further comprises: receiving climate modeling data indicating future climate impact on the railway infrastructure; identifying a predicted defect in the railway infrastructure by inputting the sensor data, the satellite radar data, and the climate modeling data into the one or more trained machine learning models; and providing the monitor output by recommending a proactive mitigation action against the predicted defect.

### Brief Description of the Drawings

The drawings included herewith are for illustrating various examples of systems, methods, and devices of the teaching of the present specification and are not intended to limit the scope of what is taught in any way.
FIG. 1 is a schematic diagram showing a system for monitoring railway infrastructure, in accordance with one or more embodiments.
FIG. 2 is a side view schematic diagram showing an example autonomous track measurement unit (ATMU) of the system of FIG. 1 installed on a locomotive.
FIG. 3 is a schematic diagram showing an example configuration of the ATMU of FIG. 2.
FIG. 4 is a block diagram showing an example monitor system included in the system of FIG. 1.
FIG. 5 is a flowchart showing a computer-implemented method of monitoring railway infrastructure, in accordance with one or more embodiments.

### Detailed Description

Several example embodiments are described herein. It will be appreciated that numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description and the drawings are not to be considered as limiting the scope of the embodiments described herein in any way, but rather as merely describing the implementation of the various embodiments described herein.

It should be noted that terms of degree such as "substantially", "about" and "approximately" when used herein mean a reasonable amount of deviation of the modified term such that the end result is not significantly changed. These terms of degree should be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

The embodiments of the systems and methods described herein may be implemented in hardware or software, or a combination of both. These embodiments may be implemented in computer programs executing on programmable computers, each computer including at least one processor, a data storage system (including volatile memory or non-volatile memory or other data storage elements or a combination thereof), and at least one communication interface. For example and without limitation, the programmable computers (referred to below as computing devices) may be a server, network appliance, embedded device, computer expansion module, personal computer, laptop, personal data assistant, cellular telephone, smart-phone device, tablet computer, wireless device or any other computing device capable of being configured to carry out the methods described herein.

In some embodiments, the communication interface may be a network communication interface. In embodiments in which elements are combined, the communication interface may be a software communication interface, such as those for inter-process communication (IPC). In still other embodiments, there may be a combination of communication interfaces implemented as hardware, software, and a combination thereof.

Program code may be applied to input data to perform the functions described herein and to generate output information. The output information is applied to one or more output devices, in known fashion.

Each program may be implemented in a high-level procedural or object-oriented programming and/or scripting language, or both, to communicate with a computer system. However, the programs may be implemented in assembly or machine language, if desired. In any case, the language may be a compiled or interpreted language. Each such computer program may be stored on a storage media or a device (e.g. ROM, magnetic disk, optical disc) readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the systems, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloads, magnetic and electronic storage media, digital and analog signals, and the like. The computer useable instructions may also be in various forms, including compiled and non-compiled code.

Various embodiments have been described herein by way of example only. Various modifications and variations may be made to these example embodiments without departing from the spirit and scope of the invention, which is limited only by the appended claims. Also, in the various user interfaces illustrated in the figures, it will be understood that the illustrated user interface text and controls are provided as examples only and are not meant to be limiting. Other suitable user interface elements may be possible.

The disclosed systems and methods for monitoring railway infrastructure can enable improvements in safety, reliability, and/or cost associated with rail transportation by addressing shortcomings in railway infrastructure maintenance. The disclosed systems and methods can enable automated, remote, and real-time monitoring of railway infrastructure. The disclosed systems and methods can enable predictive maintenance of the railway infrastructure by detecting defects before they cause a failure, and by generating predictions of future defect development. The disclosed systems and methods can provide near real-time insights, analytics, and actionable data to enable railway infrastructure owners/operators to conduct targeted maintenance activities.

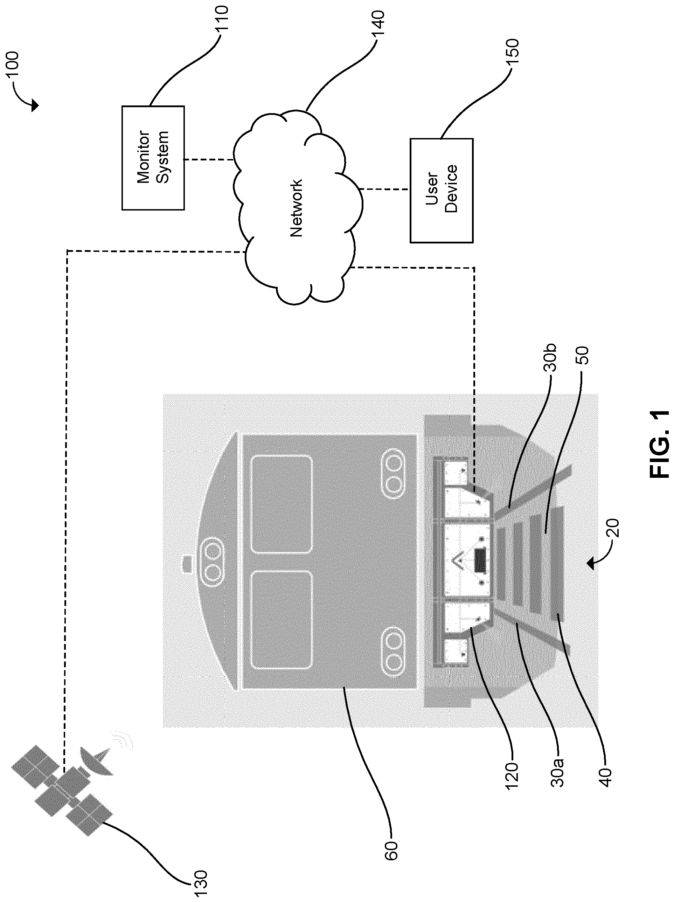

Reference is first made to FIG. 1. FIG. 1 is a schematic diagram showing an example system 100 for monitoring railway infrastructure 20. System 100 includes a monitor system 110, an autonomous track measurement unit (ATMU) 120, a satellite system 130, a network 140 and a user device 150. In other examples, system 100 may include fewer or greater number of components. In the illustrated example, monitor system 110 is located remote from ATMU 120. In other examples, monitor system 110 may be integrated into ATMU 120.

Railway infrastructure 20 can be any railway infrastructure that supports rail transport. In the illustrated example, railway infrastructure 20 includes parallel rails 30a and 30b anchored to sleepers (ties) 40 and installed on ground surface 50. In other examples, railway infrastructure 20 may include other types of structures, e.g., a monorail structure.

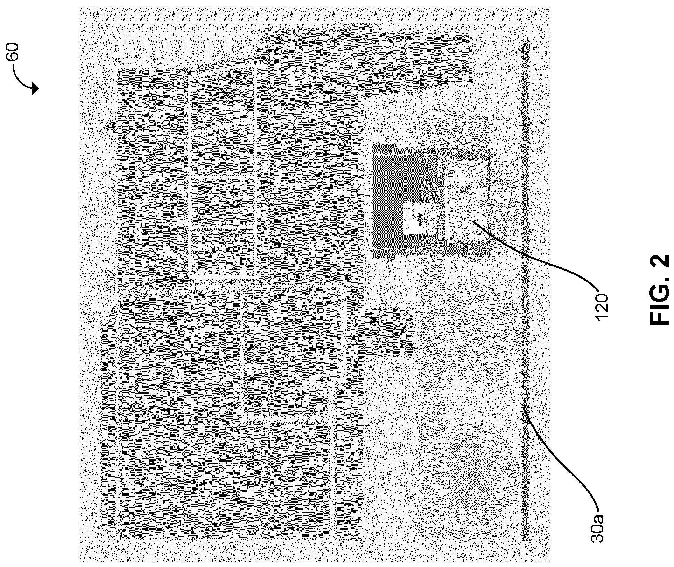

ATMU 120 may be configured for installation on any suitable vehicle that travels over railway infrastructure 20. In the illustrated example, ATMU 120 is installed on a lower front side of a locomotive 60. FIG. 1 shows a front view schematic of ATMU 120 installation on locomotive 60 and FIG. 2 shows a side view schematic of ATMU 120 installation on locomotive 60. In other examples, ATMU 120 may be installed at other locations on locomotive 60 or may be installed on other types of vehicles (e.g., a rail carriage, a specialty rail maintenance vehicle etc.).

ATMU 120 may include multiple sensors that generate sensor data indicating parameters and/or defects associated with railway infrastructure 20. The parameters can include geometric measurements of rails 30 and/or sleepers 40, structural parameters associated with ground surface 50 and/or subsurface below ground surface 50 etc. The parameters may include, for example, track profile, track gauge, cross-level, track temperature, curvature, vertical/horizontal alignment, warp, twist, internal rail cross-section, vertical/horizontal wear measurements, etc. The defects can be any defects that may pose a safety risk, for example, a risk of derailment. The defects can include, for example, defective crossties, broken tie plates, vertical curvature anomalies, geometric abnormalities in the rail profile/track gauge etc.

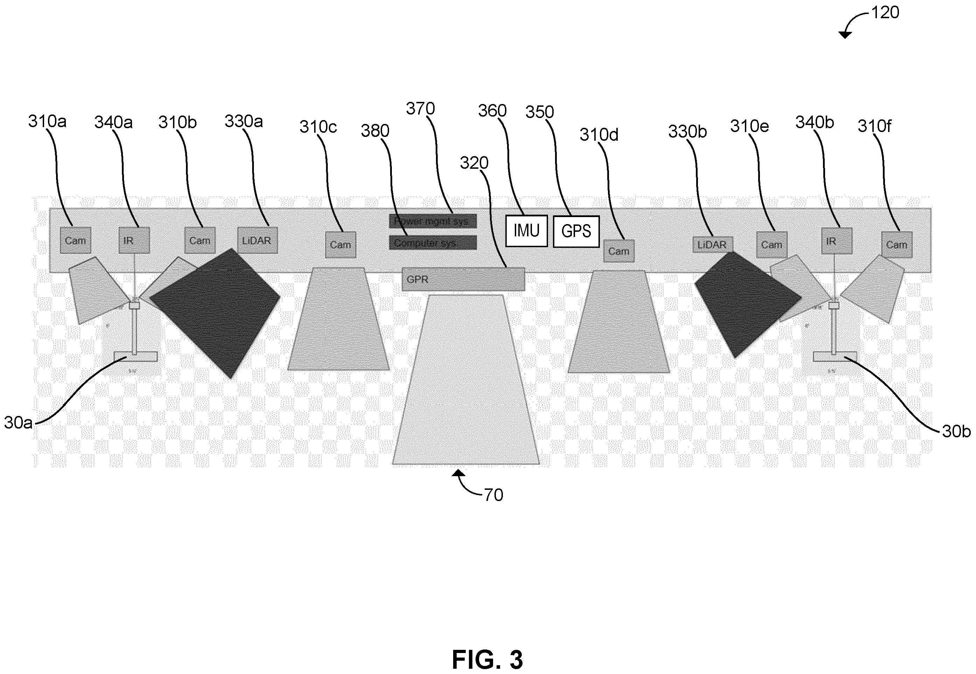

ATMU 120 may include any suitable combination of sensors. Reference is now made to FIGS. 1 to 3. FIG. 3 is a schematic diagram showing an example configuration of ATMU 120. In the illustrated example, ATMU 120 includes multiple sensors 310-340, a Global Positioning System (GPS) 350, an Inertial Measurement Unit (IMU) 360, a power management system 370, and a computer system 380. In other examples, ATMU 120 may include fewer or greater number of components.

Sensors 310-340 include imaging devices 310a-310f, Ground Positioning Radar (GPR) 320, Light Detection and Ranging (LiDAR) sensors 330a, 330b, and thermal sensors 340a, 340b. ATMU 120 may include any suitable number, type and/or configuration of the sensors. For example, ATMU 120 may include greater or fewer types of sensors. As another example, ATMU 120 may include a different number of sensors of any given type. As another example, ATMU 120 may include different positional configurations of the sensors. A smaller number of sensors may reduce the cost and/or computational complexity of system 100. A greater number of sensors may provide a larger amount of sensor data and enable higher monitoring performance.

In the illustrated example, imaging devices 310 includes a first pair of outer cameras 310a and 310b, a second pair of outer cameras 310e and 31 0f, and inner cameras 310c and 310d. The first pair of outer cameras 310a and 310b are positioned to capture image data of rail 30a from two imaging angles while ATMU 120 travels along railway infrastructure 20. The second pair of outer cameras 310e and 310f are positioned to capture image data of rail 30b from two imaging angles while ATMU 120 travels along railway infrastructure 20. The inner cameras 310c and 310d are positioned to capture image data of sleepers 40 and ground surface 50 while ATMU 120 travels along railway infrastructure 20. Monitor system 110 can use the image data captured by cameras 310 to perform geometrical measurements and/or detect visual defects associated with rails 30 and/or sleepers 40. In other examples, ATMU 120 may include a different configuration of imaging devices 310.

In the illustrated example, GPR 320 is centrally positioned to capture radar data for a subsurface 70 below ground surface 50. Subsurface 70 may include one or more layers. For example, subsurface may include a ballast, a subballast, and a subgrade layer. Monitor system 110 can use the radar data captured by GPR 320 to measure subsurface parameters and/or detect subsurface-related defects. For example, the measured subsurface parameters may include layer extent, water content, material properties etc. of one or more layers of subsurface 70. The subsurface-related defects may include, for example, fouled ballast, poor drainage, subgrade failure, deformation or attrition, unstable embankments etc. In other examples, ATMU 120 may include a different configuration of GPR 320. For example, additional GPRs may be positioned on outer sides of ATMU 120 to capture subsurface radar data for the rail track shoulder portions.

In the illustrated example, LiDAR sensors 330a and 330b are positioned to capture point cloud data from inner capture angles for rails 30a and 30b respectively. Monitor system 110 can use point cloud data captured by LiDAR sensors 330 to measure various parameters and/or detect defects associated with railway infrastructure 20. For example, monitor system 110 can use captured 2D point cloud data to detect geometrical deviations in the inner rail portions leading to sleepers 40. In other examples, ATMU 120 may include a different configuration of LiDAR sensors 330.

In the illustrated example, thermal sensors 340a and 340b are positioned to capture temperature data of rails 30a and 30b respectively. Any suitable thermal sensors may be used, for example, infrared temperature sensors. In other examples, ATMU 120 may include a different configuration of thermal sensors 340.

GPS 350 can generate location data indicating location of ATMU 120 as ATMU 120 travels to monitor railway infrastructure 20. Monitor system 110 can use the location data to associate the sensor data with corresponding measurement locations on railway infrastructure 20. In some embodiments, ATMU 120 may not include a GPS.

IMU 360 may generate location data and/or vibration data. The location data can indicate location of ATMU 120 as ATMU 120 travels to monitor railway infrastructure 20. Monitor system 110 can use the location data to associate the sensor data with corresponding measurement locations on railway infrastructure 20. The vibration data can indicate vibrations associated with ATMU 120 as ATMU 120 travels to monitor railway infrastructure 20. Monitor system 110 can use the vibration data for noise filtering of the sensor data, for example, to filter out noise associated with vibrations of locomotive 60. In some embodiments, ATMU 120 may not include an IMU.

Power management system 370 may have any suitable design to manage power supply to other components of ATMU 120. In some embodiments, ATMU 120 may not include a power management system. For example, the other components of ATMU 120 may include integrated power management systems that receive power supplied by locomotive 60.

Computer system 380 may have any suitable design to control operations of ATMU 120. Computer system 380 may control the operation of other components of ATMU 120. In some embodiments, computer system 380 may receive sensor data, GPS data and/or IMU data from the other components of ATMU 120. Computer system 380 may send the received data to monitor system 110, for example, via network 140. Optionally, computer system 380 may pre-process the received data before sending the data to monitor system 110. In some embodiments, ATMU 120 may not include a centralized computer system. For example, the other components of ATMU 120 may include integrated control systems and/or communication systems.

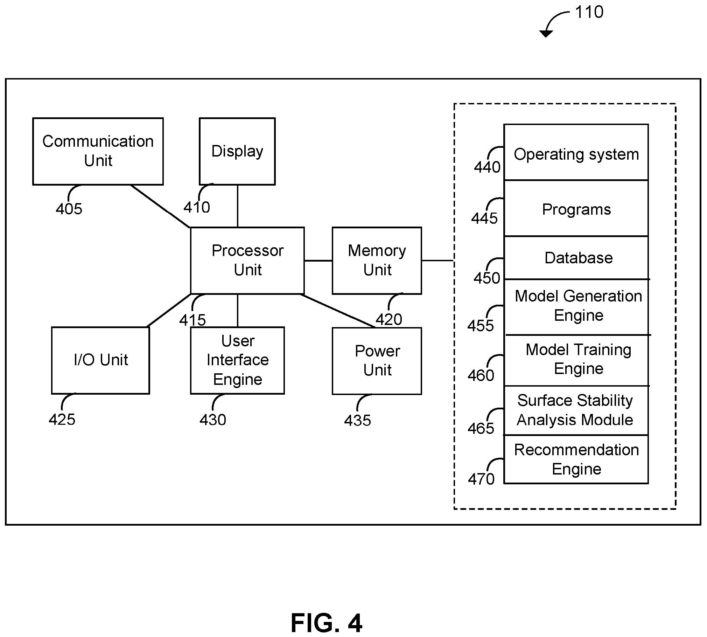

Reference is now made to FIGS. 1 to 4. FIG. 4 is a block diagram showing an example monitor system 110. In the illustrated example, monitor system 110 includes a communication unit 405, a display 410, a processor unit 415, a memory unit 420, an I/O unit 425, a user interface engine 430 and a power unit 435. In other examples, monitor system 110 may include a different combination of components. One or more components of monitor system 110 may be at a remote location and communicate with monitor system 110 using a communication network.

Communication unit 405 can include wired or wireless connection capabilities. Communication unit 405 can be used by monitor system 110 to communicate with other devices or computers. For example, monitor system 110 may use communication unit 405 to receive, via network 140, sensor data from ATMU 120. As another example, monitor system 110 may use communication unit 405 to provide (e.g., via network 140) recommendations or insights to user device 150.

Display 410 may be a LED or LCD based display and may be a touch sensitive screen that supports gestures. Display 410 may be integrated into monitor system 110. Alternatively, display 410 may be located physically remote from monitor system 110 and communicate with monitor system 110 using a communication network, for example, network 140. In some embodiments, monitor system 110 may not include a dedicated display 410. For example, monitor system 110 may provide output displays via a display of user device 150.

I/O unit 425 can include at least one of a mouse, a keyboard, a touch screen, a thumbwheel, a trackpad, a trackball, a card-reader, voice recognition software and the like, depending on the particular implementation of monitor system 110. In some embodiments, some of these components can be integrated with one another. I/O unit 425 can enable a user to interact with monitor system 110.

Power unit 435 can be any suitable power source that provides power to monitor system 110 such as a power adaptor or a rechargeable battery pack depending on the implementation of monitor system 110, as is known by those skilled in the art.

Processor unit 415 can control the operation of monitor system 110. Processor unit 415 can be any suitable processor, controller or digital signal processor that can provide sufficient processing power depending on the configuration, purposes and requirements of monitor system 110, as is known by those skilled in the art. For example, processor unit 415 may be a high-performance general processor. For example, processor unit 415 may include a standard processor, such as an Intel^{®} processor, or an AMD^{®} processor. Alternatively, processor unit 415 can include more than one processor with each processor being configured to perform different dedicated tasks. Alternatively, specialized hardware (e.g., graphical processing units (GPUs)) can be used provide some of the functions provided by processor unit 415.

Processor unit 415 can execute a user interface engine 430 that may be used to generate various user interfaces. User interface engine 430 may be configured to provide a user interface on display 410. Optionally, monitor system 110 may be in communication with external displays via network 140, for example, a display of user device 150. User interface engine 430 may generate user interface data for the external displays that are in communication with monitor system 110.

User interface engine 430 can be configured to provide a user interface to enable set-up and initialization of monitor system 110. User interface engine 430 can be configured to provide a user interface to receive various user inputs, for example, user inputs related to railway infrastructure location, infrastructure monitoring frequency, sensitivity/threshold levels for defect detection (e.g., based on industry standards, regulatory requirements etc.). User interface engine 430 can be configured to provide a user interface to provide monitor outputs to a user of monitor system 110. The monitor outputs may include, for example, real-time insights, analytics, actionable data, maintenance recommendations etc.

Memory unit 420 can include software code for implementing an operating system 440, programs 445, a database 450, a model generation engine 455, a model training engine 460, a surface stability analysis module 465 and a recommendation engine 470.

Memory unit 420 can include RAM, ROM, one or more hard drives, one or more flash drives or some other suitable data storage elements such as disk drives, etc. Memory unit 420 can be used to store an operating system 440 and programs 445, as is commonly known by those skilled in the art. For instance, operating system 440 provides various basic operational processes for monitor system 110. For example, the operating system 440 may be an operating system such as Windows^{®} Server operating system, or Red Hat^{®} Enterprise Linux (RHEL) operating system, or another operating system. Programs 445 can include various programs so that monitor system 110 can perform various functions such as, but not limited to, receiving data, identifying defects associated with the railway infrastructure, providing monitor outputs etc.

Database 450 may include a Structured Query Language (SQL) database such as PostgreSQL or MySQL or a not only SQL (NoSQL) database such as MongoDB, or Graph Databases, etc. Database 450 may be integrated with monitor system 110. Alternatively, database 450 may run independently on a database server in network communication with monitor system 110.

Database 450 may store user inputs received from user device 150, sensor data received from ATMU 120, and/or satellite radar data received from satellite system 130. Database 450 may store one or more machine learning models used by monitor system 110. In some embodiments, database 450 may store monitor outputs generated by monitor system 110.

Model generation engine 455 may generate one or more machine learning models used by monitor system 110. For example, model generation engine 455 may generate machine learning models to analyze received image data, radar data, temperature data, point cloud data, GPS data, IMU data etc. In some embodiments, monitor system 110 may not include a model generation engine 455. Monitor system 110 may receive the machine learning models from an external device. The generated and/or received models may be stored in database 450. In some embodiments, the generated and/or received models may be stored in an external storage device that is in network communication with monitor system 110.

Model training engine 460 may train one or more machine learning models used by monitor system 110. The machine learning models may include models generated by model generation engine 455 and/or models received from external devices.

Model training engine 460 may be configured to perform training of the machine learning models at various times. For example, model training engine 460 may be configured to train the models when they are initially generated by model generation engine 455. As another example, model training engine 460 may be configured to train the models based on a time-based schedule. The time-based schedule may be based on a training time period parameter stored in database 450. As another example, model training engine 460 may be configured to train the models in response to the model output accuracy falling below a threshold level. In some embodiments, model training engine 460 may train a model in response to a training request. The training request may be received, for example, from user device 150.

Model training engine 460 may use any suitable training method to train the machine learning models. The training method may be selected, for example, based on factors including the type of model, available computational resources, accuracy requirements, and/or size/type of training dataset available. Model training engine 460 may use historical data to train the machine learning models. In some embodiments, model training engine 460 may use simulated or synthetic training data to train the machine learning models.

Referring back to FIG. 1, satellite system 130 may include any suitable satellite system that provides Interferometric Synthetic Aperture Radar (InSAR) data for railway infrastructure 20. The satellite InSAR data can provide displacement measurements of the Earth's surface from space. Monitor system 110 can use the InSAR data to determine surface stability (horizontal or vertical) of ground surface 50. In some embodiments, satellite system 130 may include a weather satellite system that provides weather-related data for railway infrastructure 20.

Network 140 may include any suitable communication network. For example, network 140 may include a communication network such as the Internet, a Wide-Area Network (WAN), a Local-Area Network (LAN), or another type of network. In some embodiments, network 140 may include a point-to-point connection, or another communications connection between two nodes. The illustrated example shows a single network 140 connecting monitor system 110, ATMU 120, satellite system 130 and user device 150. In other examples, a combination of different networks may be used to provide interconnections between monitor system 110, ATMU 120, satellite system 130 and user device 150.

User device 150 may include any suitable device usable by a user to receive a monitor output from monitor system 110. User device 150 may include, for example, a desktop computer, a laptop computer, a tablet device, a smartphone, a workstation etc. The user can be, for example, an owner, an operator, a maintenance technician etc. of railway infrastructure 20. The monitor output can include, for example, real-time insights, analytics, actionable data, maintenance recommendations etc. generated by monitor system 110.

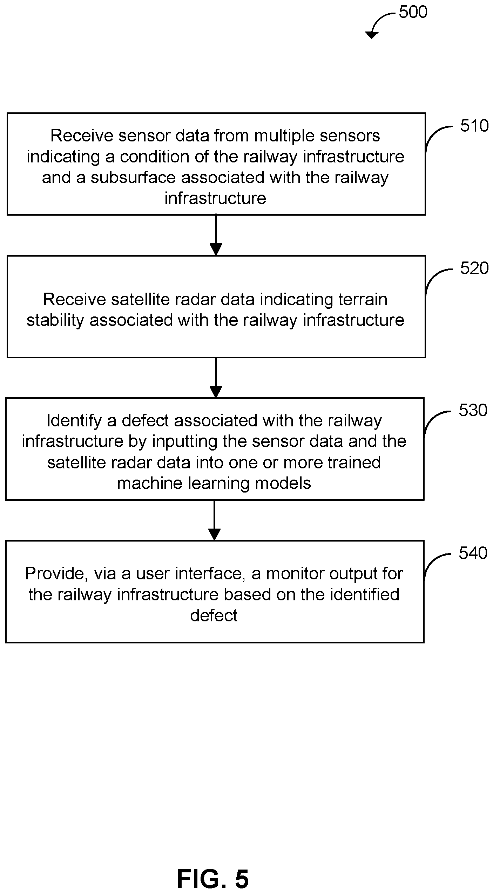

Reference is now made to FIG. 5. FIG. 5 is a flowchart showing a computer-implemented method 500 of monitoring railway infrastructure. The railway infrastructure can be, for example, railway infrastructure 20 shown in FIG. 1. Method 500 may be implemented using any suitable system. For example, method 500 may be implemented using monitor system 110 shown in FIG. 1, and concurrent reference is made in the below description to FIGS. 1 to 4.

Method 500 may be performed at various times. For example, method 500 may be performed based on an automated schedule (e.g. a fixed time interval, a maximum period after previous monitoring, a maximum usage amount after previous monitoring, etc.). As another example, method 500 may be automatically performed when input data is received from an ATMU travelling over and monitoring railway infrastructure. As another example, method 500 may be performed in response to a command input received from an owner/operator/user of the railway infrastructure (e.g., an unscheduled monitoring in response to a predicted defect risk).

At act 510, method 500 includes receiving sensor data from multiple sensors indicating a condition of the railway infrastructure and a subsurface associated with the railway infrastructure. For example, monitor system 110 may receive sensor data captured by sensors 310-340 of ATMU 120. In some examples, the received sensor data may include GPS data and/or IMU data.

At act 520, method 500 includes receiving satellite radar data indicating terrain stability associated with the railway infrastructure. For example, monitor system 110 may receive InSAR data from satellite system 130 at act 520.

In some embodiments, method 500 includes receiving weather data at act 520. The weather data may be received from weather satellites or other sources. The weather data can provide localized weather-related information for the railway infrastructure. The weather data may include, for example, temperature data, humidity data, rainfall data, snowfall data etc. The weather data may include historical, current and/or predicted future weather information.

Weather conditions may impact the railway infrastructure in different ways. Weather conditions may directly cause defects in the railway infrastructure or may affect the surrounding subgrade thereby indirectly causing defects in the railway infrastructure. For example, high ambient temperatures can cause continuous welded rails to expand rapidly leading to bending and/or misalignment. As another example, ice jacking can be caused by accumulation and pooling of ice-melt water at the base of the tracks.

In some embodiments, method 500 includes receiving climate data at act 520. The climate data may include historical climate data, current climate data and/or predicted future climate data. The climate data may include longer-term data compared with the weather data. The predicted future climate data may be based on any suitable climate models. For example, the climate data may include climate modelling data based on the climate model developed by the National Research Council of Canada (NRC). The climate modelling data can enable method 500 to evaluate future impacts of climate change on the railway infrastructure. At act 530, method 500 can identify a predicted future defect in the railway infrastructure caused by climate change. At act 540, method 500 can provide a monitor output recommending a proactive mitigation action against the predicted future defect.

Climate conditions may impact the railway infrastructure in different ways. Climate conditions may directly cause defects in the railway infrastructure or may affect the surrounding subgrade thereby indirectly causing defects in the railway infrastructure. For example, freeze-thaw cycles can result in the formation of ice buildup with time thereby making the rails susceptible to gauge spreading when a train passes. This can increase train derailment risk, particularly as the frequency and intensity of freeze-thaw cycles increases with climate-change. As another example, melting permafrost can compromise the stability of the railway infrastructure subgrade.

At act 530, method 500 includes identifying a defect associated with the railway infrastructure by inputting the received data into one or more trained machine learning models. The identified defect may include an existing defect that is detected at act 530. The identified defect may include a predicted future defect. Monitor system 110 may use a combination of multiple machine learning models trained by model training engine 460 to identify defects at act 530.

For example, monitor system 110 may input image data captured by cameras 310 into an image processing model trained to provide object detection and/or object classification outputs. Optionally, the image processing model may output an associated confidence score. The image processing model may be any suitable machine learning model. For example, the image processing model may be a convolutional neural network (CNN)-based deep learning model. In some embodiments, transfer learning from pre-trained models using Resnet and EfficientNet may be applied to improve model performance. The image processing model may be trained (e.g., by model training engine 460) using labelled training images. In some embodiments, monitor system 110 may pre-process the received image data before inputting into the image processing model. The pre-processing may include, for example, normalization, augmentation, and/or feature extraction.

As another example, monitor system 110 may input temperature data captured by thermal sensors 340 into a temperature processing model trained to provide a binary classification output. The binary classification output can indicate a normal or anomalous operating temperature condition of rails 30. The temperature processing model may be any suitable machine learning model. For example, the temperature processing model may be a Support Vector Machine (SVM). The temperature processing model may be trained (e.g., by model training engine 460) using a semi-supervised learning method. For example, the temperature processing model may be trained using labelled training data for anomalous operating temperature conditions and using unlabeled training fata for normal operating temperature conditions. In some embodiments, monitor system 110 may pre-process the received temperature data before inputting into the temperature processing model. The pre-processing may include, for example, normalization and/or noise reduction.

As another example, monitor system 110 may input radar data captured by GPR 320 into a radar processing model trained to provide a sub-surface anomaly detection output. The sub-surface anomaly detection output can indicate anomalies in subsurface 70. The subsurface anomalies, if left uncorrected, may cause defects in railway infrastructure 20. The radar processing model may be any suitable machine learning model. For example, the radar processing model may be Recurrent Neural Networks (RNN)-based model. The radar processing model may be trained (e.g., by model training engine 460) using a supervised learning method. The training data may include labelled ground truth data that captures patterns in subsurface structures. In some embodiments, monitor system 110 may pre-process the received radar data before inputting into the radar processing model. The pre-processing may include, for example, noise removal and/or feature enhancement.

As another example, monitor system 110 may input point cloud data captured by LiDAR sensors 330 into a point cloud processing model trained to provide an object detection and analysis output. The output can include, for example, a 3D point cloud analysis of the detected object. The point cloud processing model may be any suitable machine learning model. For example, the point cloud processing model may be ensemble-based models. The point cloud processing model may be trained (e.g., by model training engine 460) using a supervised learning method. The training data may include labelled training samples that include point cloud data with corresponding ground truth information. In some embodiments, monitor system 110 may pre-process the received point cloud data before inputting into the point cloud processing model. The pre-processing may include, for example, noise removal and/or point cloud segmentation.

As another example, monitor system 110 may input InSAR data received from satellite system 130 into surface stability analysis module 465. Surface stability analysis module 465 may include any suitable machine learning model that can perform time-series analysis. For example, surface stability analysis module 465 may include a Long Short-Term Memory Network (LSTM). Surface stability analysis module 465 may be trained to generate a surface stability output identifying railway infrastructure sections that may be deforming at irregular rates. The railway infrastructure sections may be identified based on surface displacement measurements included in the InSAR data. Optionally, surface stability analysis module 465 may provide a confidence score associated with the output.

In some examples, the InSAR data may include surface displacement measurements conducted during an individual scan. In other examples, the InSAR data may include surface displacement measurements conducted during multiple scans. Surface stability analysis module 465 may use multiple surface displacement measurements conducted over a period (e.g., over a 1 year period or longer) to monitor surface stability over the period and generate a surface stability output including a future deformation prediction.

Surface stability analysis module 465 may be trained (e.g., by model training engine 460) using a supervised learning method. The training data may include labelled training samples for ground deformation patterns. In some embodiments, monitor system 110 may pre-process the received InSAR data before inputting into surface stability analysis module 465. The pre-processing may include, for example, data filtering and/or normalization.

There may be various challenges associated with processing the data received at acts 510 and 520. For example, the received data may include large amounts of data having a large computational cost associated with processing the large amount of data. In some embodiments, method 500 may include downscaling methods to reduce the amount of received data that is further processed.

For example, the received climate modeling data may include a large amount of data. Monitor system 110 may apply downscaling methods to the received climate modeling data including, for example, statistical downscaling and/or bias adjustment and correction. The statistical downscaling methods may include developing statistical relationships between large-scale climate variables (e.g., from global climate models) and local-scale observations. Monitor system 110 may use the statistical relationships to generate downscaled climate projections for specific regions (e.g., local regions for railway infrastructure 20). The downscaling can reduce the amount of data that is further processed while enabling preservation of critical statistical properties for the local region. Monitor system 110 may further post-process the downscaled climate modeling data to address biases that can be inherent in climate modeling data. The post-processing can include, for example, adjusting the downscaled climate modeling data to align with observed local climate conditions. The bias adjustment and correction can improve the accuracy of future climate predictions tailored to the local region of railway infrastructure 20.

At act 540, method 500 includes providing, via a user interface, a monitor output for the railway infrastructure based on one or more defects identified at act 530. For example, recommendation engine 470 of monitor system 110 may provide the monitor output. The monitor output can include a corrective action to address an existing defect detected in the railway infrastructure. The monitor output can include a preventative action to address a predicted future defect.

Monitor system 110 may use any suitable implementation for recommendation engine 470. In some embodiments, recommendation engine 470 may be implemented as a decision tree ensemble model including, for example, a Random Forest model.

Monitor system 110 may provide one or more inputs to recommendation engine 470. The inputs may include outputs generated by the one or more machine learning models at act 530, historical data (e.g., historical climate data, historical maintenance data, historical railway infrastructure defect/failure data etc.), and/or contextual data (e.g., current weather data, railway infrastructure usage data, regulatory requirements for railway infrastructure etc.).

Recommendation engine 470 may be trained (e.g., by model training engine 460) using a supervised learning method. The training data may include samples having a specific input data combination and a successful response action for that specific input data combination. For example, a training data sample may include an input data combination of measured track parameters, weather data and subsurface conditions indicating a high risk of track deformation. The successful response action for this specific input data combination may include an urgent track inspection and repair. Model training engine 460 may use a large and diverse training dataset to train recommendation engine 470 to capture complex relationships between input data combinations and optimal/successful response actions.

At act 540, the trained recommendation engine 470 may generate a monitor output for railway infrastructure that aligns with historical or simulated successful actions for similar contexts/input data combinations. Monitor system 110 may provide the monitor output to a user (e.g., an owner/operator/maintenance technician of railway infrastructure 20) via a user interface. The user interface may be generated, for example, by user interface engine 430. The monitor output can enable users to undertake predictive/proactive maintenance actions and/or optimize planned maintenance actions.

There may be various challenges associated with generating the monitor output. For example, the inputs to recommendation engine 470 may be based on different types of sensor data generated by different types of sensors (e.g., image data generated by cameras, point cloud data generated by LiDAR sensors, temperature data generated by thermal sensors, radar data generated by GPR etc.). Recommendation engine 470 may use one or more data fusion methods to combine the inputs based on different types of sensor data.

The data fusion methods may include combining inputs based on a confidence score assigned to the underlying sensor data and a correlation score of the underlying sensor data with other sensor data. Recommendation engine 470 may assign the confidence scores based on the historical accuracy and/or reliability of the sensor data. Sensor data with higher historical accuracy and/or reliability may be assigned a higher confidence score and may be given higher weight during the data fusion. Recommendation engine 470 may assign the correlation scores based on a correlation between sensor data from a given sensor and sensor data from other sensors. A higher correlation score may indicate higher consistency of the sensor data from the given sensor with sensor data from other sensors. Sensor data with higher correlation scores may be given higher weight during the data fusion.

The data fusion methods may improve reliability and/or accuracy of the monitor output by dynamically adjusting the contribution of different sensor data based on the confidence scores and correlation scores. This can provide a more nuanced and context-aware data fusion process compared to a method that provides equal treatment to different sensor data regardless of historical accuracy/reliability and sensor data correlation.

The present invention has been described here by way of example only. Various modification and variations may be made to these exemplary embodiments without departing from the spirit and scope of the invention, which is limited only by the appended claims.

## Claims

1. A computer-implemented method of monitoring railway infrastructure, the method comprising:
receiving sensor data from multiple sensors indicating a condition of the railway infrastructure and a subsurface associated with the railway infrastructure;
receiving satellite radar data indicating terrain stability associated with the railway infrastructure;
identifying a defect associated with the railway infrastructure by inputting the sensor data and the satellite radar data into one or more trained machine learning models; and
providing, via a user interface, a monitor output for the railway infrastructure based on the identified defect.

2. The method of claim 1, wherein the sensor data includes image data generated by one or more imaging devices, the image data indicating a visual defect associated with a rail or a railway tie of the railway infrastructure.

3. The method of claim 1 or claim 2, wherein the sensor data includes radar data generated by a ground positioning radar (GPR), the radar data indicating a subsurface defect in a portion of the subsurface.

4. The method of any one of claims 1 to 3, wherein the sensor data includes temperature data of one or more rails of the railway infrastructure, the temperature data being generated by a thermal sensor.

5. The method of any one of claims 1 to 4, wherein the sensor data includes point cloud data of one or more rails of the railway infrastructure, the point cloud data being generated by a light detection and ranging (LiDAR) sensor.

6. The method of any one of claims 1 to 5, further comprising receiving global positioning system (GPS) data providing location information associated with the sensor data.

7. The method of any one of claims 1 to 6, further comprising receiving inertial measurement unit (IMU) data providing at least one of location information and vibration information associated with the sensor data.

8. The method of any one of claims 1 to 7, wherein one or more of the multiple sensors are installed under a rail car that travels along the railway infrastructure.

9. The method of any one of claims 1 to 8, wherein the defect includes an existing defect detected in the railway infrastructure; and the monitor output includes a corrective action to address the defect.

10. The method of any one of claims 1 to 9, wherein the defect includes a predicted future defect in the railway infrastructure; and the monitor output includes a preventative action to address the defect.

11. The method of any one of claims 1 to 10, further comprising:
receiving climate modeling data indicating future climate impact on the railway infrastructure;
identifying a predicted defect in the railway infrastructure by inputting the sensor data, the satellite radar data, and the climate modeling data into the one or more trained machine learning models; and
providing the monitor output by recommending a proactive mitigation action against the predicted defect.

12. A system for monitoring railway infrastructure, the system comprising:
a memory storing processor-executable instructions; and
a processor communicatively coupled to the memory, the instructions configuring the processor to perform a computer-implemented method of monitoring railway infrastructure, wherein the method is defined according to any one of claims 1 to 11.
